(19) Europäisches Patentamt
European Patent Office
Office européen des brevets

(11) Veröffentlichungsnummer: **0 023 718**
**B1**

(12) **EUROPÄISCHE PATENTSCHRIFT**

(45) Veröffentlichungstag der Patentschrift: **23.03.83**

(51) Int. Cl.³: **D 06 P 5/00**, D 06 P 1/18, C 09 B 29/36

(21) Anmeldenummer: **80104576.6**

(22) Anmeldetag: **02.08.80**

(54) **Verfahren zum Bedrucken von synthetischem, hydrophobem Fasermaterial nach dem Transferdruckprinzip.**

(30) Priorität: **06.08.79 DE 2931847**

(43) Veröffentlichungstag der Anmeldung: **11.02.81 Patentblatt 81/6**

(45) Bekanntmachung des Hinweises auf die Patenterteilung: **23.03.83 Patentblatt 83/12**

(84) Benannte Vertragsstaaten: **CH DE FR GB IT LI**

(56) Entgegenhaltungen:
**DE-A-1 544 446**
**DE-A-2 739 174**
**DE-A-2 824 829**
**US-A-4 134 723**

**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft, Hanauer Landstrasse 526, D-6000 Frankfurt am Main 61 (DE)**

(72) Erfinder: **Tappe, Horst, Dr., Ringstrasse 9, D-6057 Dietzenbach (DE)**
Erfinder: **Schuster, Claus, Ulmenstrasse 30, D-6238 Hofheim (DE)**

(74) Vertreter: **Urbach, Hans-Georg, Dr. et al, Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Verfahren zum Bedrucken von synthetischem, hydrophobem Fasermaterial nach dem Transferdruckprinzip

Die vorliegende Erfindung betrifft ein Verfahren zum Bedrucken von synthetischem, hydrophobem Fasermaterial oder von Mischungen von synthetischem, organischem Fasermaterial mit präparierten Cellulosefasern, ferner präparierten oder modifizierten Cellulosefasern nach dem Transferdruckprinzip, dadurch gekennzeichnet, daß man als sublimierbare Farbstoffe Azofarbstoffe der allgemeinen Formel I

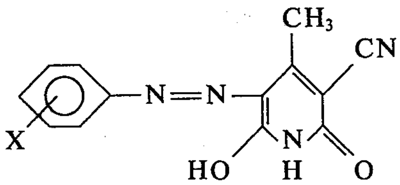

(I)

verwendet, worin X eine geradkettige oder verzweigte Alkylgruppe mit 1 bis 4 Kohlenstoffatomen bedeutet.

Die Farbstoffe der Formel I werden nach an sich bekannten Verfahren hergestellt, indem man ein Anilin der Formel II

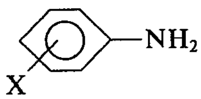

(II)

worin X die oben angegebene Bedeutung besitzt, diazotiert und die resultierende Diazoniumverbindung mit 6-Hydroxy-3-cyan-4-methyl-pyridon(2) kuppelt.

Es ist möglich, daß die Farbstoffe der allgemeinen Formel I und die Kupplungskomponenten in tautomeren Formen vorliegen. Im Rahmen der vorliegenden Erfindung werden unter der Formel I auch die tautomeren Formen zusammengefaßt.

Die Herstellung der Kupplungskomponente kann nach den Angaben von Bobbit und Scola (J. Org. Chem. 25, 560 [1960]) durch Kondensation von Acetessigsäureäthylester und Cyanacetamid in Gegenwart von Kaliumhydroxid in siedendem Methanol erfolgen.

Als Diazokomponente kommen in Frage o-Toluidin, m-Toluidin, p-Toluidin, 1-Amino-2-äthyl-benzol, 1-Amino-3-äthyl-benzol, 1-Amino-4-äthyl-benzol, 1-Amino-2-n-propyl-benzol, 1-Amino-3-n-propyl-benzol, 1-Amino-4-n-propyl-benzol, 1-Amino-2-iso-propyl-benzol, 1-Amino-3-iso-propyl-benzol, 1-Amino-4-iso-propyl-benzol, 1-Amino-2-n-butyl-benzol, 1-Amino-3-n-butyl-benzol, 1-Amino-4-n-butyl-benzol, 1-Amino-2-sec-butyl-benzol, 1-Amino-3-sec-butyl-benzol, 1-Amino-4-sec-butyl-benzol, 1-Amino-2-iso-butyl-benzol, 1-Amino-3-iso-butyl-benzol, 1-Amino-4-iso-butyl-benzol, 1-Amino-3-tert-butyl-benzol, 1-Amino-4-tert-butyl-benzol.

Bevorzugt verwendet werden Farbstoffe der Formel III

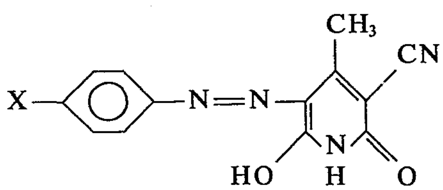

(III)

worin X $CH_3$, $C_2H_5$, $nC_3H_7$,

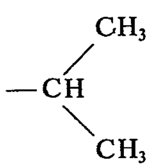

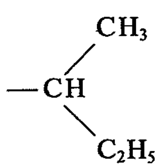

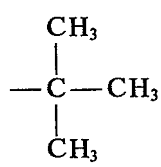

bedeutet, besonders geeignet für das erfindungsgemäße Verfahren ist der Farbstoff der Formel IV

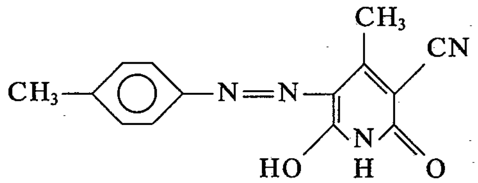

(IV)

Das Transferdruckverfahren ist allgemein bekannt und z. B. in den französischen Patentschriften 1 223 330 und 1 334 829 beschrieben worden. Die Farbstoffe werden z. B. in Form von Drucktinten, wie sie z. B. in der französischen Patentschrift 1 573 698 beschrieben sind, oder als Pasten auf Hilfsträger, wie Papier, andere Cellulosematerialien, wie Baumwolle oder Cellophan, Metallfolien und dergleichen, wie sie aus der französischen Patentschrift 1 575 069 bekannt sind, durch Foulardieren, Pflatschwalzen oder Spritzen aufgebracht. Die Farbstoffe können auf die Hilfsträger auch nach Druckverfahren mit üblichen Druckmaschinen, wie z. B. Rouleaux-, Tief-, Rotationsschablonen-, Flachschablonen-, Relief- oder Flexo-Druckmaschinen aufgebracht werden. Die Drucktinten stellen gegebenenfalls kunstharzhaltige Farbstofflösungen oder -dispersionen in geeigneten organischen Lösungsmitteln, wie z. B. Kohlenwasserstoffen, Benzol, Toluol, Xylol, Chlorkohlenwasserstoffen, Chlorbenzol, Chloroform, Dichloräthan, Trichloräthylen, Perchloräthylen, Alkoholen, Äthanol, iso-Propanol, Benzylalkohol und Estern, wie z. B. Essigester und deren Mischungen, dar.

Für den Einsatz als Verdickungsmittel kommen z. B. veresterte und/oder verätherte Cellulosederivate, bevorzugt in Kombination mit Alkohol, in Frage.

Bei wäßrigen Systemen liegen die Farbstoffe in fein dispergierter Form vor. Die damit hergestellten Druckfarben enthalten Verdickungsmittel, wie z. B. Kernmehlderivate oder Alginate oder synthetische Verdicker.

Für den Transferdruck mit Farbstoffen der Formel I geeignete Substanzen sind textile Materialien, die aus Polyester, Cellulosetriacetat, Cellulose-$2^{1}/_{2}$-acetat, Polyamid, Polyacrylnitril, gegebenenfalls präparierte oder modifizierte Cellulosefasern und Mischungen dieser Fasern, aber auch nichttextile Gegenstände, wie Folien, Bänder oder Blöcke aus handelsüblichen Polymerisat- oder Polykondensatkunststoffen.

Vom Hilfsträger werden die Farbstoffe auf das zu bedruckende Material durch Hitzeeinwirkung bei 140 bis 250° C, vorzugsweise bei 160 bis 220° C, während 15 bis 60 Sekunden oder länger übersublimiert. Die Hitzeeinwirkung kann durch Heißluft, Heißdampf, Infrarotstrahlung oder Kontakthitze erfolgen, wobei diese genannten Verfahren auch unter Anwendung von vermindertem Druck durchgeführt werden können.

In der DE-OS 2 824 829 wird ein Verfahren zum Färben von synthetischen Textilien nach dem Transferdruckverfahren beschrieben, bei dem Farbstoffe der Formel V eingesetzt werden

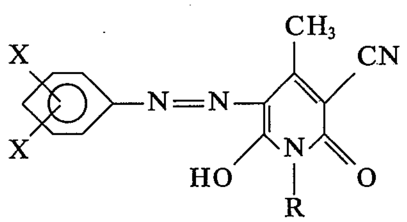

(V)

worin X für Halogen, Y für Wasserstoff, Halogen, eine Alkylgruppe oder eine Alkoxygruppe und R für eine Alkylgruppe mit 1 bis 8 Kohlenstoffatomen steht.

Ferner werden in der DE-AS 2 739 174 Hilfsträger beansprucht, die Farbstoffe der allgemeinen Formel VI tragen

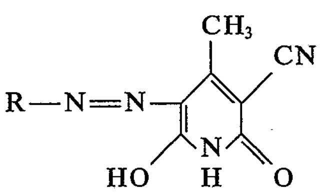

(VI)

worin R einen Benzolrest bedeutet.

Die allgemeine Lehre der DE-AS 2 739 174 läßt es unklar, ob unter »Benzolrest« nur der unsubstituierte oder ein beliebig substituierter Phenylrest zu verstehen ist.

Im letzteren Fall kann dieser Rest bis zu 5 beliebige Substituenten tragen, die, abgesehen davon, daß die technische Lehre damit völlig unbestimmt ist, für das Transferdruckverfahren absolut ungeeignet sein können, wie z. B. Sulfogruppen oder $C_{20}$-Alkylgruppen.

Überraschenderweise wurde nun gefunden, daß die Farbstoffe der Formel I für das Transferdruckverfahren besonders gut geeignet sind. Sie liefern Drucke mit vorzüglichen

Farbausbeuten, z. B. auf Polyester, aber auch auf präparierten Polyester-Baumwoll-Mischfasern und präparierten Cellulosefasern mit exzellenten Echtheiten, wie z. B. Lichtechtheit, Wäsche 40° und 60°C und Wasser schwer.

Gegenüber den in der DE-AS 2 739 174 expressis verbis genannten Farbstoffen der Formel VI, in denen R für o-Chlorphenyl oder o-Cyanphenyl steht, zeichnen sich die Farbstoffe der Formel I gegenüber denen der Formel VI durch ein Absorptionsmaximum bei größeren Wellenlängen aus, was insbesondere bei Trichromie erwünscht ist, und durch eine größere Farbstärke in dem gewünschten längerwelligen Bereich.

Gegenüber den Farbstoffen der Formel V besitzen die Farbstoffe der Formel I ebenfalls höhere Farbstärke.

Beispiel 1

75 Teile des Farbstoffes der Formel

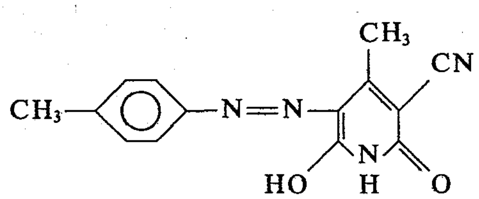

50 g eines anionischen Dispergiermittels, wie z. B. eines Ligninsulfonats oder eines Kondensationsproduktes aus Naphthalinsulfonsäure und Formaldehyd, und 100 Teile Wasser werden in einer Kugelmühle durch achtstündiges Mahlen in eine feinverteilte Form übergeführt.

50 bis 200 Teile der so erhaltenen, wäßrigen Dispersion werden mit 400 Teilen einer 10%igen Johannisbrotkernmehlätherverdickung und 550 bis 400 Teilen Wasser angeteigt.

Mit dieser Druckpaste wird ein Papier im Tiefdruckverfahren bedruckt. Verpreßt man dieses Papier während 15 bis 60 Sekunden bei 200°C mit einem Textil aus Polyesterfasern, so erhält man einen klaren, farbstarken, gelben Druck mit guten Echtheiten. Der Farbstoff des Beispiels 1 wurde auf folgendem Weg hergestellt:

107 Teile p-Toluidin werden in 1000 Teilen Wasser und 240 Teilen konzentrierter Salzsäure mit 75,9 Teilen Natriumnitrit bei 0 bis 5°C diazotiert, wobei man durch Zugabe von 1200 Teilen Eis die Temperatur hält; es wird 60 Minuten bei 0 bis 5°C nachgerührt. Die so bereitete Diazolösung wird anschließend bei 0 bis 5°C in 30 Minuten zu einer Lösung von 180,6 Teilen 6-Hydroxy-3-cyan-4-methyl-pyridon(2)-Natrium in 4000 Teilen Wasser gegeben, wobei man durch Zugabe von 5000 Teilen Eis die Temperatur hält, man rührt nach, bis kein Diazoniumsalz mehr nachweisbar ist, filtriert den Farbstoff ab und wäscht salzfrei. Nach dem Trocknen erhält man 260 g eines gelben Farbstoffpulvers.

Beispiel 2

40 Teile des Farbstoffes der Formel

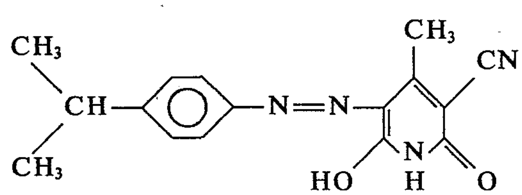

werden mit 60 Teilen Kolophonium bei 100 bis 110°C in einem Kneter bis zur vollständigen Homogenisierung geknetet und nach dem Abkühlen auf einer der üblichen Mühlen gemahlen. Man erhält ein feinkörniges Farbstoffpulver.

100 Teile der 40%igen Farbstoffpräparation werden in 960 Teilen Firnis (beispielsweise ein Gemisch aus 20% kolophoniummodifiziertem Maleinat-Harz, 10% Polyvinylbutyral, 65% Äthanol und 5% Äthylglykol) eingerührt. Mit der so erhaltenen Drucktinte wird im Tiefdruck Papier bedruckt. Verpreßt man dieses Papier während 15 bis 60 Sekunden bei 200°C mit einem Gewebe aus Polyesterfasern, so erhält man einen farbstarken, gelben Druck mit guten Echtheiten.

Der hier verwendete Farbstoff wird erhalten, wenn man 135 g p-Isopropylanilin analog den Angaben im 2. Teil des Beispiels 1 diazotiert und auf 6-Hydroxy-3-cyan-4-methyl-pyridon(2)-Natrium kuppelt.

**Patentansprüche**

1. Verfahren zum Bedrucken von synthetischem, hydrophobem Fasermaterial oder von Mischungen von synthetischem, hydrophobem Fasermaterial mit präparierten Cellulosematerialien oder präparierten Cellulosematerialien unter Einsatz von Zubereitungen sublimierbarer, sulfongruppenfreier Monoazofarbstoffe nach dem Transferdruckprinzip, dadurch gekennzeichnet, daß man als sublimierbare, sulfogruppenfreie Monoazofarbstoffe solche der allgemeinen Formel I

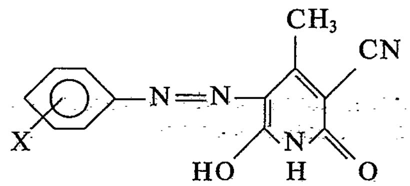
(I)

einsetzt, worin X eine geradkettige oder verzweigte Alkylgruppe mit 1 bis 4 Kohlenstoffatomen bedeutet.

2. Verfahren nach Anspruch 1, dadurch gekennzeichnet, daß man den Farbstoff der Formel

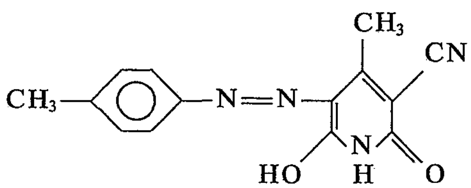

einsetzt.

**Claims**

1. Process for printing synthetic, hydrophobic fibre material or mixtures of synthetic, hydrophobic fibre material and treated cellulose materials, or treated cellulose materials in accordance with the principle of transfer printing, using formulations of sublimable monoazo dyestuffs which are free from sulpho groups, characterised in that dyestuffs of the general formula I

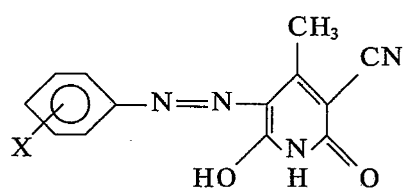
(I)

wherein X denotes a straight-chain or branched alkyl group with 1 to 4 carbon atoms, are employed as the sublimable monoazo dyestuffs which are free from sulpho groups.

2. Process according to Claim 1, characterised in that the dyestuff of the formula

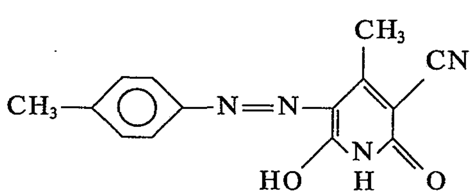

is employed.

**Revendications**

1. Procédé pour imprimer, suivant le principe de l'impression par report, une matière fibreuse synthétique hydrophobe ou des mélanges constitués d'une matière fibreuse synthétique hydrophobe et de matières cellulosiques prétraitées, ou des matières cellulosiques prétraitées, à l'aide de compositions contenant des colorants monoazoïques sublimables dépourvus de groupe sulfo,

procédé caractérisé en ce qu'on utilise, comme colorants monoazoïques sublimables dépourvus de groupe sulfo, des colorants répondant à la formule générale I

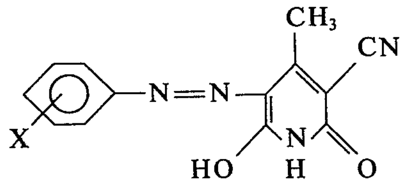

(I)

dans laquelle X représente un radical alkyle, linéare ou ramifié contenant de I à 4 atomes de carbone.

2. Procédé selon la revendication 1 caractérisé en ce qu'on utilise le colorant de formule